# EUROPEAN PATENT SPECIFICATION

(11) **EP 1 356 742 B1**
(45) Date of publication and mention of the grant of the patent: **17.01.2007**
(21) Application number: 03425247.8
(22) Date of filing: 18.04.2003
(51) Int. Cl.: A23G 9/04, A47J 31/40

(54) **An equipment for producing and dispensing slush or chilled beverages dispenser**
Ausrüstung zur Herstellung und Ausgabe von Eis-Wassermischungen oder gekühlten Getränken
Dispositif pour la production et la distribution de granité ou de boissons refrigerées

(30) Priority: 24.04.2002 IT GE20020034
(43) Date of publication of application: 29.10.2003
(73) Proprietor: ALI S.p.A. Divisione GBG, 40011 Anzola Emilia (Bologna) (IT)
(72) Inventor: Cocchi, Gino, 40137 Bologna (IT); Vannini, Antonio, 40038 Vergato (Bologna) (IT); Rinaldi, Roberto, 40013 Castel Maggiore (Bologna) (IT)
(74) Representative: Lanzoni, Luciano

(56) References cited:
- WO-A-01/20272
- WO-A-01/25135
- US-A- 4 869 072
- US-A- 5 706 661
- US-A1- 2002 023 457
- US-A1- 2002 023 935
- US-A1- 2002 043 071

## Description

The present invention relates to equipment by which products such as granita ices or chilled drinks are mixed and dispensed on demand, of the type comprising a refrigerated reservoir or bowl filled with water and with a flavouring substance that can be a syrup, or a concentrated fruit juice with or without pulp.

In particular, the invention relates to a modular autofill device directly applicable to such equipment and serving to replenish the bowl automatically with water and flavouring in predetermined proportions.

The installation of autofill devices on granita dispensers is beset by a problem having its origin principally in the fact that machines of this type take a given length of time to transform a liquid mixture into a relative end product.

An automatic fill apparatus for semi-frozen or chilled liquid beverage is described in document US 2002/0023457 A1.

The greater the quantity of liquid mixture put in at the start of the chilling period required to produce the granita, the longer the transformation time will become.

If water and flavouring are added subsequently, even in modest quantities, it will not be possible to dispense the end product momentarily. In effect, an ice-based product tends naturally to float, and given that granita is dispensed from the lower part of the bowl holding the liquid mixture, it follows that if the product is dispensed before all of the mixture has been frozen and turned into granita, what emerges from the tap will consist largely of the unfrozen liquids introduced when the autofill function is activated.

It is therefore important that the user should know how to calculate the preparation times and the quantities dispensed, so that the bowl containing the iced product can be replenished in advance. This proves to be genuinely difficult, given the variation in levels of custom from one day to the next, also in ambient temperature, and in other factors attributable to the momentary changes in conditions that will occur during the day.

Accordingly, it is extremely important to provide a device that will replenish the bowl automatically every time the product is drawn off. In effect, the small quantities of water and flavouring introduced each time will be chilled immediately, not least by virtue of the mass of product already in the bowl, and the aforementioned drawbacks thus avoided.

Autofill devices in current use almost invariably include a water-driven mix pump connected directly to the main, by which the flavouring is suctioned generally from a can.

The outlet of the pump is connected to the bowl of the granita dispenser by way of pipelines routed generally together with wires protected internally of a sheath and forming part of electrical circuits serving to operate the pump and monitor the level of flavouring in the can.

The main drawback of such pumps is that, until primed with flavouring, they deliver only water.

Moreover, the pump is in general located remotely from the granita dispenser, so that a relatively long run of pipeline will be needed to connect the autofill device with the bowl of the dispenser to which the mixture of water and flavouring must be conveyed. Given the nature of the pipeline, it is impossible to chill the liquid while being pumped, and this represents a serious drawback.

Accordingly, the object of the invention is to provide an equipment for producing and dispensing granita or chilled beverages by which these and other drawbacks of conventional devices can be overcome.

The stated object is realized, along with others, in an equipment according to the invention and as recited in claim 1 appended.

The invention will now be described in detail, by way of example, with the aid of the accompanying drawings, in which:
- figure 1 illustrates a granita dispenser equipped with the device according to the invention, viewed in three-quarter perspective from the rear;
- figure 2 is a diagram showing the internal fluid and electrical circuits of the device according to the invention;
- figure 3 illustrates the device according to the invention, viewed in three-quarter perspective from the front;

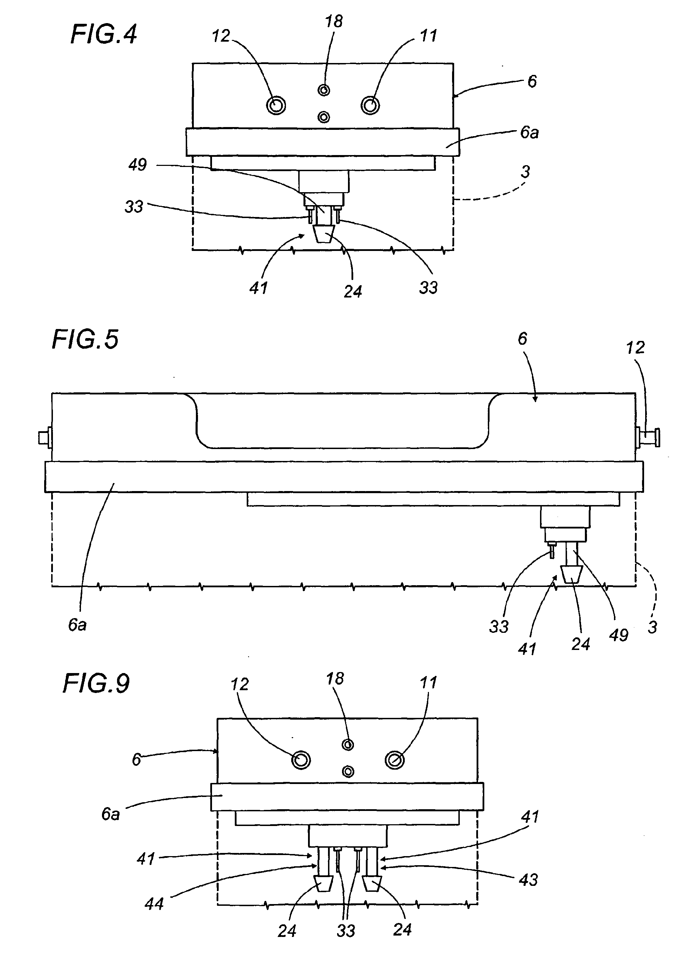

- figures 4 and 5 illustrate the device of figure 3 viewed respectively in a front elevation and in a side elevation;
- figures 6, 7, and 8 are diagrams illustrating the fluid and electrical circuits for three alternative embodiments of the device according to the present invention;
- figure 9 illustrates the device according to the invention in an embodiment corresponding to the circuit of figure 7, viewed in a front elevation.

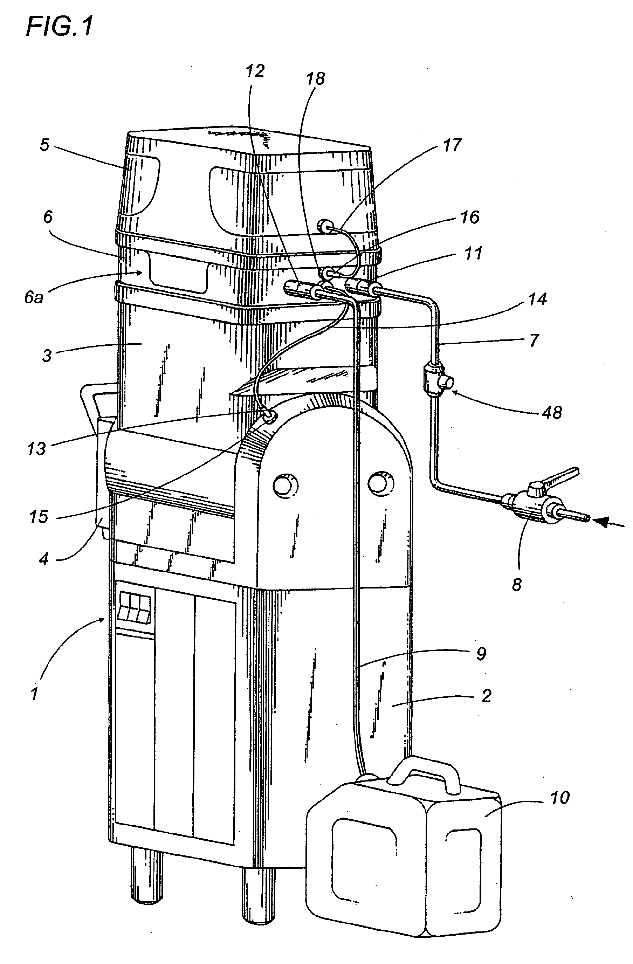

Referring to the drawings, and in particular to figure 1, numeral 1 denotes a machine for making and dispensing granita ices.

Such a machine conventionally comprises a base or cabinet 2 housing the motor and condenser of the refrigeration unit, and a motor driving the stirrer (none of which are illustrated).

3 denotes the bowl containing the evaporator of the refrigeration unit and the stirrer (neither of which are illustrated), submerged in the mass of liquid and/or iced mixture.

The bowl 3 is equipped at the front with taps 4 from which to dispense the iced product, and capped by an illuminated lid, or topper 5.

In accordance with the present invention, the granita dispenser 1 is equipped with a module 6 applicable directly to the bowl 3.

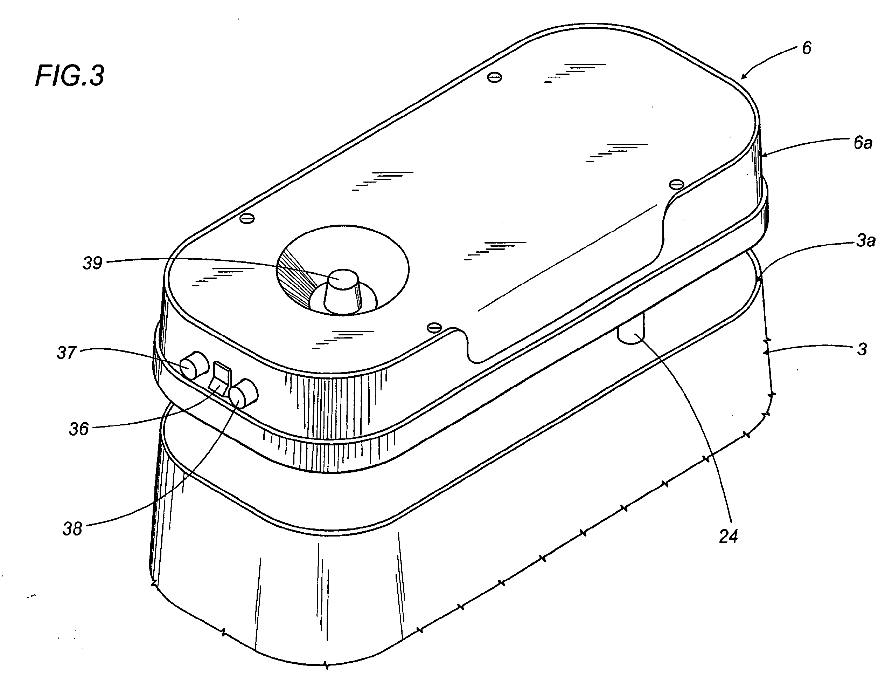

In particular, and as illustrated in figures 1 and 3, the module 6 in question comprises a modular housing 6a, interposed between the topper 5 and the bowl 3, of which the underside affords a skirt 60 creating a recess fashioned so as to receive the top of the bowl 3. Accordingly, the module 6 can be fitted swiftly and simply to the machine, resting directly on the rim 3a of the bowl 3.

Connected to the module 6, for example by means of suitable quick couplers denoted 11 and 12, are a water inlet pipe 7, connected by way of a manually operated valve 8 and possibly a pressure regulating valve 48 to a supply point on the main (not shown), and a pipe 9 immersed in a can 10 containing the flavouring. The valve 48 can be adjusted manually to suit the particular operating conditions.

The module 6 is also connected by means of a jack plug 13 and relative lead 14 to a socket outlet 15 from which power would normally be supplied direct to the illuminated topper 5. In this case, the jack plug 16 and lead 17 of the topper 5 are connected to an auxiliary socket 18 on the module 6.

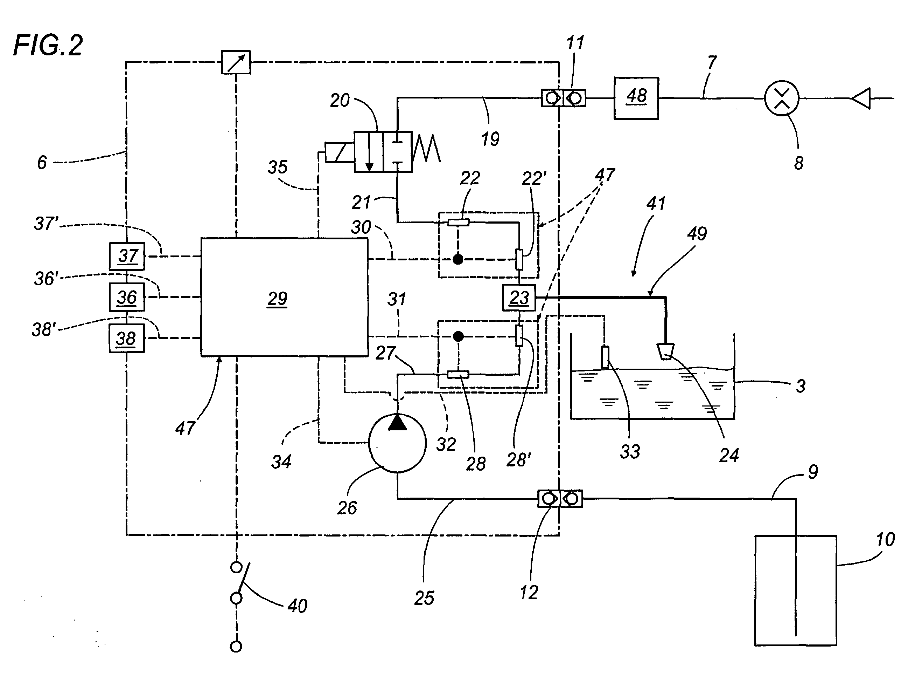

In the example of figure 2, water carried from the main along the pipe 7 enters the module 6 by way of the quick coupler 11, which is connected to an internal pipeline 19 connected in its turn to a solenoid valve 20. The solenoid valve is connected by way of a further pipeline 21 to tubular sensors denoted 22 and 22', of which the purpose will be described in due course, and thence to one inlet leg of a tee or branch fitting 23, of which the outlet leg consists in a pipeline 49 connected to a nozzle 24 discharging into the granita bowl 3.

The fitting 23, the pipeline 49 and the nozzle 24 combine to establish connection means 41 interfaced with the bowl 3.

Similarly, flavouring carried along the pipe 9 immersed in the can 10 enters the module through the relative quick coupler 12, which is connected by way of an internal pipeline 25 to the inlet side of a pump 26 connected in turn on the outlet side, by way of a further internal pipeline 27, to two tubular sensors denoted 28 and 28' of which the purpose will be described in due course, thence to the second inlet leg of the aforementioned tee or branch fitting 23.

To advantage, the internal pipelines 21 and 27 and the fitting 23 are fashioned from electrically insulating material, whereas the sensors 22-22' and 28-28', conventional in embodiment, are made of electrically conductive material and function as respective means by which to sense the presence of water and flavouring in the two pipelines 21 and 27 using the medium of electrical resistance.

The two pipelines denoted 21 and 27 and the two pipelines denoted 19 and 25 combine to establish respective feed means by which water and flavouring are conveyed through the module 6.

29 denotes an electronic control unit piloting the autofill system, to which conductors 30 and 31 coming from the respective pairs of sensors 22-22' and 28-28' are connected. Other connections to the control unit 29 include a signal conductor 32 wired to two further sensors 33 monitoring the level of the product in the bowl 3, also power conductors 34 wired to the pump 26, and power conductors 35 wired to the solenoid valve 20.

A switch 36 mounted to the front of the module 6 and connected to the control unit 29 by way of a relative conductor 36' can be operated in such a way as to deactivate the module 6, and thus allow an appreciable number of granita portions to be dispensed without any risk of the machine releasing quantities of unmixed and/or unchilled liquids.

Also mounted to the front of the module 6 are buttons 37 and 38 connected to the control unit 29 by way of respective conductors 37' and 38'. These same buttons can be activated by the user to fill the pipelines 21 and 27 with water (button 37) and flavouring (button 38), to the point of engaging the respective sensors 22-22' and 28-28'. With the two internal pipelines 21 and 27 thus primed, the buttons 37 and 38 can be deactivated manually, or alternatively, the pump 26 can be shut off and the solenoid valve 20 closed by the electronic control unit 29.

The two buttons 37 and 38 are furnished with built-in indicators that light up to warn the user when one (or both) of the liquid ingredients can no longer be detected by the sensors 22-22' or 28-28'. A buzzer (not illustrated) mounted to the control unit 29 will also sound an audible warning when either of the ingredients is missing.

40 denotes a main on/off switch by way of which the components of the module 6 are connected to the electrical power supply.

Finally, 39 denotes a knob (figure 3) connected by way of the control unit 29 to an electronic device regulating the operation of the pump 26, in such a way that the rate of flow can be adjusted manually according to requirements.

The operation of the device thus described will be substantially self-evident.

Having positioned the module 6 on the bowl 3 of the granita dispenser and made the connections to the water supply and to the can 10 of flavouring by attaching the quick couplers 11 and 12, the user proceeds to power up the module 6 by operating the switch 40, then presses the two buttons 37 and 38 to prime the sensors 22-22' and 28-28' with the respective liquids.

The electronic control unit 29 will be programmed in such a manner that the operation of the module remains inhibited until the sensors are primed.

At this juncture the autofill sequence can begin. In practice, whenever the liquid level inside the bowl 3 drops to the point of being detected by the relative sensor 33, the solenoid valve 20 opens and the pump 26 comes into operation, directing water and flavouring respectively into the tee or branch fitting 23 and through the outlet pipeline 49 to the nozzle 24, which continues to fill the bowl 3 with a mixture of the two ingredients until the sensor 33 detects that the prescribed level in the bowl 3 has been reached, whereupon the flow is shut off.

The filling operation can be interrupted likewise in the event of the sensors 22-22' and/or 28-28' detecting that either one of the two ingredients is missing. This situation is indicated visually by the warning light incorporated into the relative button 37 or 38, and audibly by the buzzer of the control unit 29.

Should the need arise for a considerable number of granita ices to be dispensed in uninterrupted succession, the control unit 29 can be by-passed temporarily by operating the switch 36.

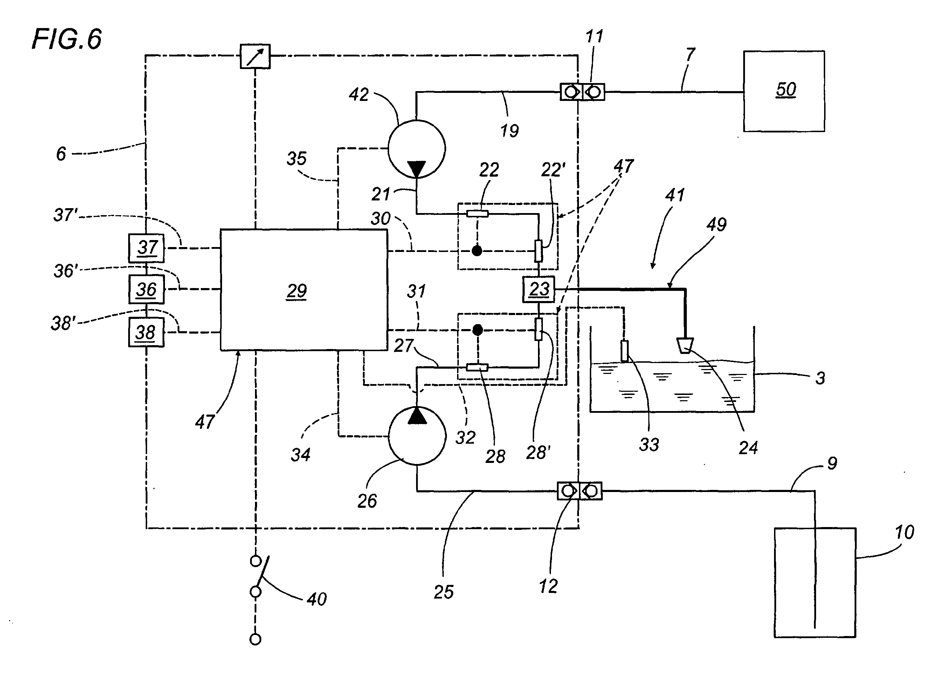

Whilst the pipe denoted 7 is described above as being connected to the water main, the connection might be made alternatively, as illustrated in the example of figure 6, to a supply of water contained in a tank 50 (a storage can, for example). In this instance the solenoid valve 20 will be replaced by a pump 42 similar in all respects to the pump 26 already mentioned.

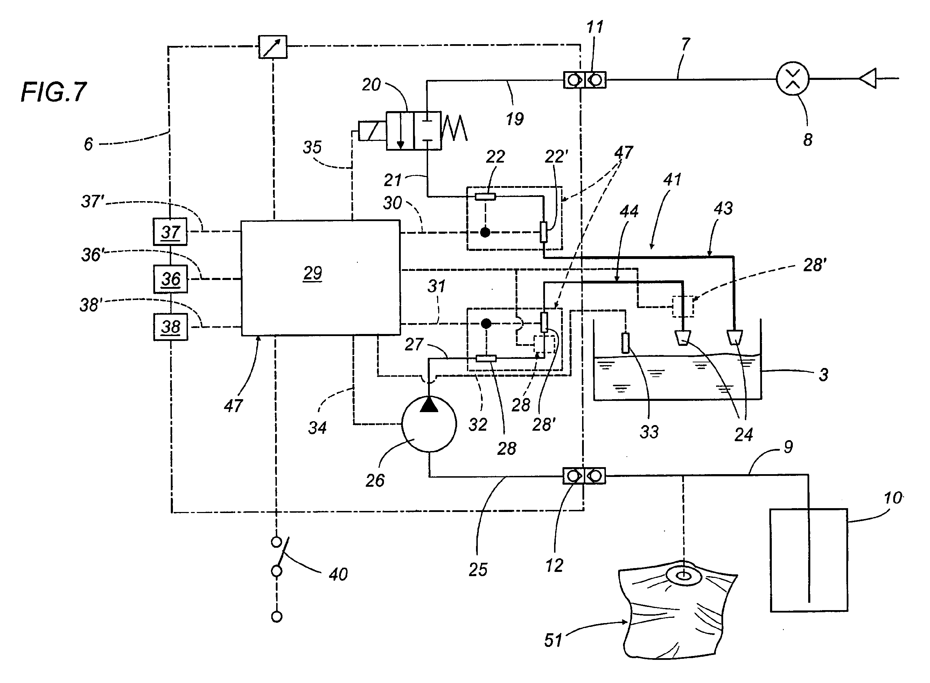

In the example of figure 7, connection means 41 comprise a first pipeline 43 by which water coming through the relative internal pipelines 19 and 21 is directed into the bowl 3 and discharged from a relative first nozzle 24, and a second pipeline 44, independent from the first, by which the flavouring suctioned through the relative pipelines 25 and 27 is directed into the bowl 3 and discharged from a second nozzle 24. It will be seen in this instance that the water and flavouring do not mix in the one pipeline 49 before discharging from one nozzle 24, as in the example of figure 2, but are discharged separately into the bowl 3 and then mixed.

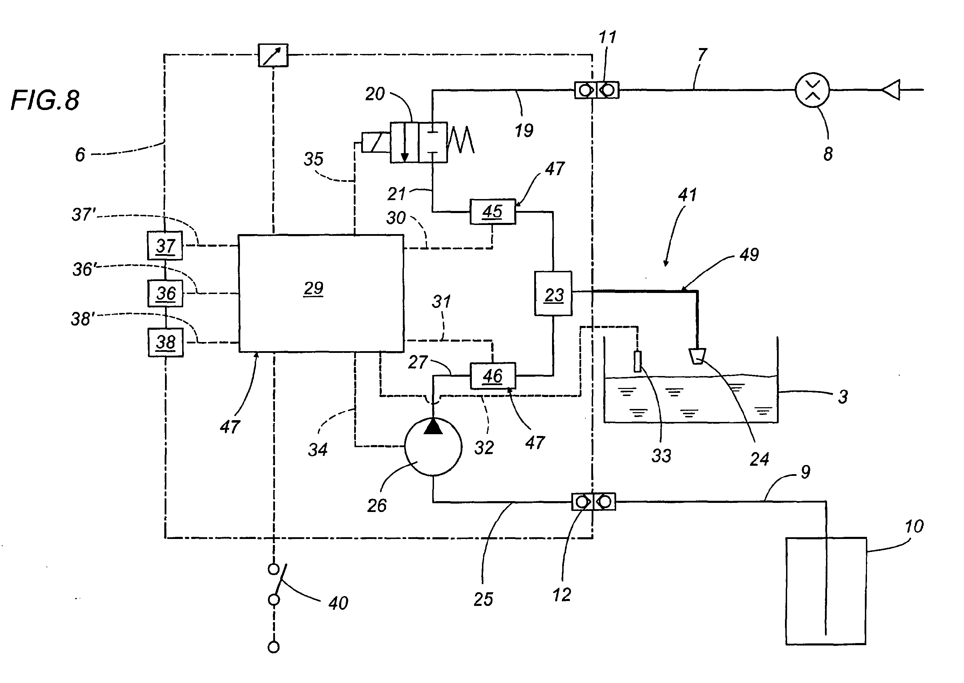

The control unit 29 and the sensors 22-22' and 28-28' combine to establish electric and electronic means, denoted 47 in their entirety, of which the static type sensors 22-22' and 28-28' might also be replaced by dynamic sensors such as flow meters 45 and 46, as in the example of figure 8. The first flow meter 45 is installed on the one pipeline 21 and serves to measure the mass or volume of water passing through, whilst the second flow meter 46 is installed on the other pipeline 27 and serves to measure the mass or volume of flavouring.

In an alternative embodiment of the device (not illustrated), the electric and electronic means 47 might incorporate sensors 22-22' and 28-28' and flow meters 45 and 46 alike, installed on one or both pipelines 21 and 27.

In the example of figure 7, finally, at least one of the two flavouring sensors 28-28' might usefully be placed on the second outlet pipeline 44, near to the nozzle 24, as illustrated by phantom lines. This type of solution will be advantageous in the event that the flavouring is drawn by the pump 26 from a sealed bag 51 which, as experience teaches, can be difficult to empty completely by suction when nearing depletion.

The present invention obviously is not limited to the examples described and/or illustrated but will embrace all such alternative solutions as may fall within the broader scope of the essential concept, namely that the means by which water is supplied to the machine are embodied independently of the means by which the flavouring is supplied, and located internally of an interchangeable module 6.

Moreover, whilst the invention is described as applicable to a granita dispenser, it might equally be applied to a machine by which chilled beverages, consisting in a blend of water and flavouring, are mixed and dispensed on demand.

Thanks to the modular design of the device to which the present invention relates, the preferred autofill configurations are applicable similarly to multiple bowl machines.

Lastly, given the ease with which it is fitted to and detached from a machine, the device is likewise easily removable for the purposes of maintenance, repair or replacement.

## Claims

1. An equipment for producing and dispensing granita or chilled beverages comprising: a machine comprising a base or cabinet (2) housing a motor, a condenser of a refrigeration unit and a motor driving a stirrer, a bowl (3) equipped with a tap from which to dispense the iced product and tapped by a lid (5); the equipment further comprising a.module (6) appearing outwardly as a modular housing (6a) positionable directly on the top of the bowl (3) of the dispenser, equipped with feed means (19, 21) conveying water, feed means (25, 27) conveying a liquid flavouring, and connection means (41) located between the bowl (3) and the feed means (19, 21; 25, 27) conveying the water and the flavouring, also electric and electronic control means (47) including a control unit (29), and sensors (28, 28'; 22, 22'; 45, 46) able to detect the presence of the flavouring and the water respectively in the feed means (25, 27; 19, 21) or in the connection means (41), or in both, and sensors (33) serving to monitor the level of the mixture in the bowl (3) and to activate the step of replenishing the bowl (3) with the water and liquid flavouring by way of the respective feed means (19, 21; 25, 27) when enabled by the sensors (28, 28'; 22, 22'; 45, 46).

2. A device as in claim 1, wherein the module (6) is coupled both to a water inlet pipe (7) and to a pipe (9) associated with a vessel (10) containing the liquid flavouring, and easily detachable from each of the selfsame pipes.

3. A device as in claim 1, wherein at least the feed means (25, 27) conveying the liquid flavouring include a respective pump (26) of which the operation is piloted by the control unit (29) in response to signals from the level sensor (33).

4. A device as in claim 3, wherein the feed means (19, 21) conveying the water include a respective pump (42) of which the operation is piloted by the control unit (29) in response to signals from the level sensor (33).

5. A device as in claim 3, wherein the feed means (19, 21) conveying the water include a solenoid valve (20) of which the operation is piloted by the control unit (29) in response to signals from the level sensor (33).

6. A device as in claims 1 to 5, wherein the feed means (19, 21) conveying the water and the feed means (25, 27) conveying the liquid flavouring flow into a single mixer pipeline (23, 49, 24) coinciding with the connection means (41) and discharging into the bowl (3).

7. A device as in claims 1 to 5, wherein the feed means (19, 21) conveying the water and the feed means (25, 27) conveying the liquid flavouring flow into respective first and second pipelines (43, 44) coinciding with the connection means (41) and discharging into the bowl (3).

8. A device as in claims 1 to 7, wherein the feed means (19, 21) conveying the water and the feed means (25, 27) conveying the liquid flavouring comprise respective lengths of pipeline (21, 27) embodied in electrically non-conductive material, also respective tubular segments (22, 22'; 28, 28') of electrically conductive material coupled into the lengths of pipeline (21, 27), wired to the control unit (29) and functioning thus as sensors able to detect the presence respectively of water and of liquid flavouring in the selfsame lengths of pipeline (21, 27).

9. A device as in claims 1 to 7, wherein the feed means (19, 21) conveying the water and the feed means (25, 27) conveying the liquid flavouring comprise respective lengths of pipeline (21, 27) with which a first flow meter (45) and a second flow meter (46) are associated, respectively, functioning thus as sensors able to detect the mass or volumetric flow rate of the water and of the liquid flavouring passing along the selfsame lengths of pipeline (21, 27).

10. A device as in claims 1 to 7, wherein the feed means (19, 21) conveying the water and the feed means (25, 27) conveying the liquid flavouring comprise respective lengths of pipeline (21, 27) of which at least one such length incorporates both the flow metering sensor (45, 46) and the presence sensors (22, 22'; 28, 28').

11. A device as in claim 1, wherein the modular housing (6a) can be retrofitted to an existing granita or chilled beverages dispenser without the need for any functional modifications to the selfsame dispenser.

12. A device as in claim 6, wherein the water and the liquid flavouring are blended in the single mixer pipeline (23, 24).

13. A device as in claim 7, wherein the water and the liquid flavouring are blended directly in the bowl (3).

14. A device as in claims 1 to 13, wherein the module (6) comprises switch means (36), connected to the control unit (29), of which the function is to deactivate the device.

15. A device as in claims 1 to 14, further comprising manually operated button means (37, 38) connected electrically to the control unit (29), by means of which the lengths of pipeline (21, 27) can be filled respectively with water and with liquid flavouring at least to the point of engaging the relative presence sensors (22, 22'; 28, 28') or flow metering sensors (45, 46), or both.

16. A device as in claims 7 and 8, wherein the sensors (28, 28') serving to detect the presence of the liquid flavouring are positioned on the second pipeline (44), near the point of discharge into the bowl (3).

17. A device as in claims 1 to 16, further comprising manually operated means (39), connected by way of the control unit (29) to an electronic device regulating the operation of the pump (26), such as will allow the flow rate of the pump (26) to be adjusted manually according to requirements.

## Patentansprüche

1. Ausrüstung zur Herstellung und Ausgabe von Granitas oder gekühlten Getränken, die Folgendes umfasst: eine Maschine, die ein Grundgestell oder ein Gehäuse (2) umfasst, in dem ein Motor, ein Kondensator einer Kühleinheit und ein Antriebsmotor für einen Rührer untergebracht sind, eine Schale (3), die mit einem Hahn, aus dem das gefrorene Produkt ausgegeben wird ausgestattet und mit einem Deckel (5) bedeckt ist, umfasst; diese Ausrüstung umfasst weiter ein Modul (6), das von außen gesehen als modulares Gehäuse (6a) erscheint, das direkt auf der Oberseite der Schale (3) des Dispensers aufgesetzt werden kann, ausgestattet mit Versorgungsmitteln (19, 21), die Wasser zuleiten, Versorgungsmitteln (25, 27), die einen flüssigen Geschmacksstoff zuleiten, und Verbindungsmitteln (41), die sich zwischen der Schale (3) und den Versorgungsmitteln (19, 21; 25, 27), die das Wasser und den Geschmacksstoff zuleiten, befinden, sowie auch elektrische und elektronische Steuereinheiten (47), die eine Steuereinheit (29) und Sensoren (28, 28'; 22, 22'; 45, 46) umfassen, die dazu imstande sind, das Vorhandensein des Geschmacksstoffs und des Wassers jeweils in den Versorgungsmitteln (25, 27; 19, 21) bzw. in den Verbindungsmitteln (41) bzw. in beiden festzustellen, und Sensoren (33), die dazu dienen, den Stand der Mischung in der Schale (3) zu überwachen und den Schritt des Auffüllens der Schale (3) mit dem Wasser und dem flüssigen Geschmacksstoff durch die entsprechenden Versorgungsmittel (19, 21; 25, 27) zu aktivieren, wenn sie durch die Sensoren (28, 28'; 22, 22'; 45, 46) dazu befähigt werden.

2. Vorrichtung nach Patentanspruch 1, bei der das Modul (6) sowohl mit einer Wassereinlassleitung (7) als auch mit einer Leitung (9) gekoppelt ist, die mit einem Gefäß (10) verbunden ist, das den flüssigen Geschmacksstoff enthält, und die leicht von jeder der besagten Leitungen abgenommen werden kann.

3. Vorrichtung nach Patentanspruch 1, bei der zumindest die Versorgungsmittel (25, 27) die den flüssigen Geschmacksstoff befördern, eine entsprechende Pumpe (26) beinhalten, deren Betrieb von der Steuereinheit (29), die auf Signale vom Pegelsensor (33) reagiert, gesteuert wird.

4. Vorrichtung nach Patentanspruch 3, bei der die Versorgungsmittel (19, 21) die das Wasser befördern, eine entsprechende Pumpe (42) beinhalten, deren Betrieb von der Steuereinheit (29), die auf Signale vom Pegelsensor (33) reagiert, gesteuert wird.

5. Vorrichtung nach Patentanspruch 3, bei der die Versorgungsmittel (19, 21) die das Wasser befördern, ein Magnetventil (20) beinhalten, dessen Betrieb von der Steuereinheit (29), die auf Signale vom Pegelsensor (33) reagiert, gesteuert wird.

6. Vorrichtung nach den Patentansprüchen 1 bis 5, bei der die Versorgungsmittel (19, 21), die das Wasser befördern, und die Versorgungsmittel (25, 27), die den flüssigen Geschmacksstoff befördern, in einer einzelnen Mischleitung (23, 49, 24) zusammenfließen, die mit den Verbindungsmitteln (41) übereinstimmt und sich in die Schale (3) entlädt.

7. Vorrichtung nach den Patentansprüchen 1 bis 5, bei der die Versorgungsmittel (19, 21), die das Wasser befördern, und die Versorgungsmittel (25, 27), die den flüssigen Geschmacksstoff befördern, jeweils in erste bzw. zweite Leitungen (43, 44) fließen, die mit den Verbindungsmitteln (41) zusammenfallen und sich in die Schale (3) ergießen.

8. Vorrichtung nach den Patentansprüchen 1 bis 7, bei der die Versorgungsmittel (19, 21), die das Wasser befördern, und die Versorgungsmittel (25, 27), die den flüssigen Geschmacksstoff befördern, entsprechende Leitungsstrecken (21, 27) umfassen, die aus nicht stromleitendem Material hergestellt sind, sowie entsprechende Rohrsegmente (22, 22'; 28, 28') aus stromleitendem Material, die an die Leitungsstrecken (21, 27) gekoppelt sind und mit der Steuereinheit (29) verkabelt sind und **dadurch** als Sensoren wirken, die dazu imstande sind, das Vorhandensein von Wasser bzw. von flüssigem Geschmacksstoff in den besagten Leitungsstrecken (21, 27) zu erfassen.

9. Vorrichtung nach den Patentansprüchen 1 bis 7, bei der die Versorgungsmittel (19, 21), die das Wasser befördern, und die Versorgungsmittel (25, 27), die den flüssigen Geschmacksstoff befördern, entsprechende Leitungsstrecken (21, 27) umfassen, mit denen jeweils ein erster Durchflussmesser (45) bzw. ein zweiter Durchflussmesser (46) verbunden ist, die **dadurch** als Sensoren funktionieren, die dazu imstande sind, die Masse bzw. die volumetrische Durchflussmenge des Wassers und des flüssigen Geschmacksstoffs, die durch die besagten Leitungsstrecken (21, 27) fließen, zu erfassen.

10. Vorrichtung nach den Patentansprüchen 1 bis 7, bei der die Versorgungsmittel (19, 21), die das Wasser befördern, und die Versorgungsmittel (25, 27), die den flüssigen Geschmacksstoff befördern, entsprechende Leitungsstrecken (21, 27) umfassen, bei denen zumindest eine dieser Strecken sowohl die Durchflussmessersensoren (45, 46) als auch die Sensoren des Vorhandenseins (22, 22'; 28, 28') enthält.

11. Vorrichtung nach Patentanspruch 1, bei der das modulare Gehäuse (6a) im Nachhinein an einen bereits vorhandenen Dispenser für Granitas oder eisgekühlte Getränke angepasst werden kann, ohne dass an diesem Dispenser irgend welche funktionelle Änderungen vorgenommen werden müssen.

12. Vorrichtung nach Patentanspruch 6, bei der das Wasser und der flüssige Geschmacksstoff in der einzelnen Mischleitung (23, 24) vermengt werden.

13. Vorrichtung nach Patentanspruch 7, bei der das Wasser und der flüssige Geschmacksstoff direkt in der Schale (3) vermengt werden.

14. Vorrichtung nach den Patentansprüchen 1 bis 13, bei der das Modul (6) Schaltmittel (36) umfasst, die mit der Steuereinheit (29) verbunden sind und deren Funktion es ist, die Vorrichtung zu deaktivieren.

15. Vorrichtung nach den Patentansprüchen 1 bis 14, die außerdem manuell betätigte Tastenmittel (37, 38) umfasst, die elektrisch mit der Steuereinheit (29) verbunden sind und durch die die Leitungsstrecken (21, 27) jeweils mit Wasser bzw. mit flüssigem Geschmacksstoff gefüllt werden können, mindestens bis zu dem Punkt, an dem die entsprechenden Sensoren für das Vorhandensein der Flüssigkeiten (22, 22'; 28, 28') bzw. die Durchflussmesssensoren (45, 46) bzw. beide anspringen.

16. Vorrichtung nach den Patentansprüchen 7 und 8, bei der die Sensoren (28, 28'), die dazu dienen, das Vorhandensein des flüssigen Geschmacksstoffs zu erfassen, an der zweiten Leitung (44) in der Nähe des Auslasspunktes in die Schale (3) positioniert sind.

17. Vorrichtung nach den Patentansprüchen 1 bis 16, die außerdem manuell betätigte Mittel (39) umfasst, die durch die Steuereinheit (29) mit einer elektronischen Vorrichtung verbunden sind, die den Betrieb der Pumpe (26) reguliert, so dass es möglich ist, den Durchsatz der Pumpe (26) manuell auf die jeweiligen Anforderungen einzustellen.

## Revendications

1. Un dispositif pour la production et la distribution de granité ou de boissons réfrigérées comprenant: une machine comprenant une base ou coffre (2) contenant un moteur, un condensateur d'une unité de réfrigération et un moteur entraînant un mélangeur, un bac (3) équipé d'un robinet permettant de distribuer le produit glacé et doté d'un couvercle (5) ; l'équipement comprenant en outre un module (6) apparaissant extérieurement comme un logement modulaire (6a) positionnable directement sur le haut du bac (3) du distributeur, équipé de moyens d'alimentation (19, 21) amenant l'eau, de moyens d'alimentation (25, 27) amenant un liquide aromatisant et de moyens de connexion (41) situés entre le bac (3) et les moyens d'alimentation (19, 21; 25, 27) amenant l'eau et le produit aromatisant, également des moyens de commande électriques et électroniques (47), comprenant une unité de commande (29) et des capteurs (28, 28' ; 22, 22' ; 45, 46) à même de détecter la présence du produit aromatisant et de l'eau respectivement dans les moyens d'alimentation (25, 27 ; 19, 21) ou dans les moyens de connexion (41), ou dans les deux, et des capteurs (33) servant à contrôler le niveau du mélange dans le bac (3) et à activer la phase de remplissage du bac (3) avec l'eau et le produit aromatisant au moyen de leurs moyens d'alimentation respectifs (19, 21; 25, 27), par suite de l'activation par les capteurs (28, 28' ; 22, 22' ; 45, 46).

2. Un dispositif selon la revendication 1, dans lequel le module (6) est couplé avec un tuyau d'entrée (7) et un tuyau (9) associé avec un récipient (10) contenant le produit aromatisant, et facilement amovible de chacun desdits tuyaux.

3. Un dispositif selon la revendication 1, dans lequel au moins les moyens d'alimentation (25, 27) amenant le liquide aromatisant comprennent une pompe (26) dont le fonctionnement est piloté par l'unité de commande (29) en réponse aux signaux provenant du capteur de niveau (33).

4. Un dispositif selon la revendication 3, dans lequel les moyens d'alimentation (19, 21) amenant l'eau comprennent une pompe (42) dont le fonctionnement est piloté par l'unité de commande (29) en réponse aux signaux provenant du capteur de niveau (33).

5. Un dispositif selon la revendication 3, dans lequel les moyens d'alimentation (19, 21) amenant l'eau comprennent un solénoïde (20) dont le fonctionnement est piloté par l'unité de commande (29) en réponse aux signaux provenant du capteur de niveau (33).

6. Un dispositif selon les revendications 1 à 5, dans lequel les moyens d'alimentation (19, 21) amenant l'eau et les moyens d'alimentation (25, 27) amenant le liquide aromatisant affluent dans un tuyau mélangeur unique (23, 49, 24) correspondant avec les moyens de connexion (41) et se déchargeant dans le bac (3).

7. Un dispositif selon les revendications 1 à 5, dans lequel les moyens d'alimentation (19, 21) amenant l'eau et les moyens d'alimentation (25, 27) amenant le liquide aromatisant affluent dans un premier et un deuxième tuyau mélangeur (43, 44) correspondant avec les moyens de connexion (41) et se déchargeant dans le bac (3).

8. Un dispositif selon les revendications 1 à 7, dans lequel les moyens d'alimentation (19, 21) amenant l'eau et les moyens d'alimentation (25, 27) amenant le liquide aromatisant comprennent des longueurs de tuyau respectives (21, 27) réalisées dans un matériau électriquement non conducteur, des segments tubulaires (22, 22' ; 28, 28') de matériau électriquement conducteur couplés dans les longueurs de tuyau (21, 27), câblés à l'unité de commande (29) et fonctionnant donc comme capteurs à même de détecter la présence respectivement de l'eau et du liquide aromatisant dans les longueurs de tuyau (21 , 27).

9. Un dispositif selon les revendications 1 à 7, dans lequel les moyens d'alimentation (19, 21) amenant l'eau et les moyens d'alimentation (25, 27) amenant le liquide aromatisant comprennent des longueurs de tuyau respectives (21, 27) avec lesquelles un premier débitmètre (45) et un deuxième débitmètre (46) sont associés, respectivement, fonctionnant donc comme capteurs à même de détecter la masse ou le débit volumétrique de l'eau et du liquide aromatisant dans les longueurs de tuyau (21 , 27).

10. Un dispositif selon les revendications 1 à 7, dans lequel les moyens d'alimentation (19, 21) amenant l'eau et les moyens d'alimentation (25, 27) amenant le liquide aromatisant comprennent des longueurs de tuyau respectives (21, 27) dont au moins une incorpore à la fois le capteur de mesure débit (45, 46) et les capteurs de présence (22, 22' ; 28, 28').

11. Un dispositif selon la revendication 1, dans lequel le logement modulaire (6a) peut être adapté sur un distributeur de granité ou de boissons réfrigérées existant sans qu'il soit nécessaire d'apporter des modifications structurelles au distributeur.

12. Un dispositif selon la revendication 6, dans lequel l'eau et le liquide aromatisant sont mélangés dans un tuyau de mélange unique (23, 24).

13. Un dispositif selon la revendication 7, dans lequel l'eau et le liquide aromatisant sont mélangés directement dans le bac (3).

14. Un dispositif selon les revendications 1 à 13, dans lequel le module (6) comprend des moyens de commutation (36), connectés à l'unité de commande (29) dont la fonction est de désactiver le dispositif.

15. Un dispositif selon les revendications 1 à 14, comprenant en outre des moyens bouton actionnés manuellement (37, 38) connectés électriquement à l'unité de commande (29), au moyen desquels les longueurs de tuyau (21, 27) peuvent être remplies respectivement d'eau et de liquide aromatisant au moins au point d'engager les capteurs de présence correspondants (22, 22' ; 28, 28') ou les capteurs de mesure débit (45, 46) ou les deux.

16. Un dispositif selon les revendications 7 et 8, dans lequel les capteurs (28, 28') servant à détecter la présence du liquide aromatisant sont positionnés sur le deuxième tuyau (44), près du point de déchargement dans le bac (3).

17. Un dispositif selon les revendications 1 à 16, comprenant également des moyens actionnés manuellement (39), connectés au moyen de l'unité de commande (29) à un dispositif électronique régulant la position de la pompe (26), de façon à permettre au débit de la pompe (26) d'être réglé manuellement selon les nécessités.
